# EUROPEAN PATENT APPLICATION

(11) **EP 3 309 855 A1**
(43) Date of publication of application: **18.04.2018**
(21) Application number: 16193570.5
(22) Date of filing: 12.10.2016
(51) Int. Cl.: H01M 2/02, H01M 10/04

(54) **BATTERY SHELL AND DEEP DRAWING METHOD FOR ITS PRODUCTION**

(71) Applicant: H & T Marsberg GmbH & Co. KG, 34431 Marsberg (Bredelar) (DE)
(72) Inventor: Seiler, Matthias, 40627 Düsseldorf (DE); Schröder, Gerd, 34431 Marsberg (DE); Witteler, Lars, Marsberg (DE); Dornbusch, Michael Peter Manfred, 40591 Düsseldorf (DE)
(74) Representative: Uexküll & Stolberg

(57) **Abstract**

The present invention relates to battery shell which is coated with a conductive lacquer wherein the conductive lacquer comprises a resin component having graphite dispersed therein and to a method for manufacturing the same. The battery shell is produced by a method, wherein a sheet metal blank is first coated with a conductive lacquer comprises a resin component having graphite dispersed therein, and which is thereafter radially drawn into a forming die by the mechanical action of a punch to form a coated cup, and wherein the coated cup is further drawn by a series of repetitive deep drawing steps using a press, wherein a sheet metal blank is radially drawn into a forming die by the mechanical action of a punch to form a battery shell which is coated with a conductive lacquer which comprises a resin component having graphite dispersed therein. When subsequently producing a battery, the steps of adding a conventional lubricant before or during deep drawing and removing the lubricant after deep drawing by carefully removing oil or grease in the deep drawn battery shell and spraying a conductive material into the inside of the battery shell can ideally be dispensed with.

## Description

The present invention relates to battery shells, i.e. the metallic outer sleeves of a battery, and a method for the manufacture thereof.

### BACKGROUND OF THE INVENTION

Conventional methods for the manufacture of battery shells of cylindrical and coin-shaped batteries, i.e. the metallic outer sleeves of the battery, apply a series of repetitive deep drawing steps using a press, wherein a sheet metal blank is radially drawn into a forming die by the mechanical action of a punch.

Lubricants are used to reduce friction between the working material and the punch and die, cool the parts during deep drawing and cleaning the deep drawing tools. They also aid in removing the part from the punch. Lubrication plays an important role in the deep drawing process as it reduces friction at the tool-workpiece interface, thus enhancing the ability to produce a good quality part. Since the quality of drawn parts significantly changes with lubrication, good lubrication condition would lead to lower scrap rate and better quality of parts. Lubrication condition greatly affects the material flow during the stamping process. Examples of lubricants used in drawing operations are heavy-duty emulsions, phosphates, white lead, and wax films. After the deep drawing operation the lubricants have to be removed.

Removing lubricant from a formed part after the deep drawing operation is important because any lubricant left behind can interfere with subsequent steps in the manufacturing of the part. Mineral oils, animal fat, and vegetable oils can be removed with an organic solvent by emulsification or saponification, or with an aqueous alkaline cleaner. Greases can also be removed from sheet metal with an organic solvent or an alkaline cleaner. Solids are more difficult to remove because they are not readily soluble. The presence of solids often requires that additional cleaning methods be used. Petroleum oils can raise special issues from removal through disposal. These oils require the use of alkaline cleaners for removal, which can then contaminate cleaner tanks with oil, leading to potential disposal challenges. Vegetable oils can be removed with hot water if the parts are cleaned immediately and with a mildly to moderately alkaline cleaner if the parts are cleaned after they have been left standing for a few days.

In order to manufacture of a battery from the battery shell obtained b said sequence of drawing steps, a conductive material is sprayed into the inside of the battery shell after removal of the lubricants, to coat the battery shell with the conductive material. Thereafter cathode material, e.g. a mixture of manganese dioxide, graphite and others, is inserted into the battery shell coated with the conductive material. In alkaline Zn-MnO₄ batteries, the cathode consists of manganese dioxide as active material and graphite as conducting additive, both in powder form, which are pressed into rings and inserted into the coated battery shell. Then a separator is inserted to prevent short-circuit of a positive and a negative electrode, followed by injecting an electrolyte into the separator to impregnate the separator with the electrolyte, and injecting an anode gel into the impregnated separator. Finally a current collector is inserted into the anode gel and the battery is sealed to prevent leakage and drying. The current collector functions as an anode terminal, and the battery shell can function as cathode.

As stated above, the lubricant used during the drawing steps must be carefully removed in order to avoid any interference with subsequent process steps, for example coating the battery shell with a conductive material. As removing the lubricant is not always easy, there is need for improved processes, where lubricant removal may be avoided. Such processes for be of great commercial interest.

### SUMMARY OF THE INVENTION

The object is achieved with a battery shell which is coated with a conductive lacquer wherein the conductive lacquer comprises a resin component having graphite dispersed therein. The resin component of the conductive lacquer may comprise a resin selected from the group consisting of a polyacrylate, a polymethacrylate and/or a polyester. According to an embodiment of the present invention, the graphite content may be between 20% and 60%, preferably 30% to 50% of the dry weight of the resin component. According to another embodiment of the present invention, the conductive lacquer may further comprise a corrosion inhibitor. The corrosion inhibitor may comprise a compound selected from the group of 2-butan-1,4-diol, polyether phosphate, alkanolamine salts of nitrogen-containing organic acids, propargyl alcohol alkoxylate, alkylphosphate, polyether phosphate or oleoyl sarcosine acid or mixtures thereof, preferably selected from polyether phosphate and alkylphosphate.

According to an embodiment of the present invention, the battery shell is produced by a method, wherein a sheet metal blank is first coated with a conductive lacquer comprises a resin component having graphite dispersed therein, and which is thereafter radially drawn into a forming die by the mechanical action of a punch to form a coated cup, and wherein the coated cup is further drawn by a series of repetitive deep drawing steps using a press, wherein a sheet metal blank is radially drawn into a forming die by the mechanical action of a punch to form a battery shell which is coated with a conductive lacquer which comprises a resin component having graphite dispersed therein. Said coating can be applied to the sheet metal blank by using a doctor blade, roll application or by a coil coating method, wherein a coating material is applied onto a metal strip in a continuous process which includes cleaning, if necessary, and chemical pre-treatment of the metal surface and either one-side or two-side, single or multiple application of (liquid) paints or coating powders by rollers, where the paints or coating powders are subsequently cured or/and laminating with permanent plastic films (EN 10169:2010). Preferably, the coating is applied to the sheet metal blank by using a doctor blade or by roll application.

When said coating is applied onto the sheet metal blank using a doctor blade, the coating is preferably cured at temperatures ranging from room temperature to 150°C, more preferably from 100°C to 140°C. The coating thickness is preferably chosen between 10 µm and 30 µm, more preferably between 15 µm and 20 µm. Coating the sheet metal blank using a doctor blade and curing at temperatures ranging from room temperature to 150°C has the advantage that no expensive additional equipment is necessary.

When said coating is applied using a roll application method, the coating is preferably cured at temperatures ranging from 150 to 300°C, more preferably from 200 to 250°C. The coating thickness is preferably chosen between 5 µm and 20 µm, more preferably between 9 µm and 15 µm.

Surprisingly, the conductive lacquer which comprises a resin component and a filler component which is formed at least in part by graphite can act as a lubricant and at the same time as a conductive inner coating for the battery shell. Accordingly, the steps of adding a conventional lubricant and removing the lubricant after deep drawing by carefully removing oil or grease in the deep drawn battery shell and spraying a conductive material into the inside of the battery shell can be dispensed with in order to form a battery from the battery shell.

According to another embodiment, the present invention provides a method for manufacturing a battery comprising the steps of providing a battery shell which is coated with a conductive lacquer wherein the conductive lacquer comprises a resin component having graphite dispersed therein according to any of claims 1 to 7, inserting cathode material into the battery shell coated with the conductive material to produce a battery shell provided with cathode material, thereafter inserting separator into the battery shell provided with cathode material, followed by injecting an electrolyte into the separator to impregnate the separator with the electrolyte to produce a battery shell provided with cathode material and a separator, injecting an anode gel into battery shell provided with cathode material and a separator, inserting a current collector is inserted into the anode gel, and sealing the so obtained battery.

### DETAILED DESCRIPTION OF THE INVENTION

The battery shell of the present invention is coated with a conductive lacquer wherein the conductive lacquer comprises a resin component having graphite dispersed therein. The resin component of the conductive lacquer may be selected from the group consisting of polymers or copolymers of acrylate, polymers or copolymers of methacrylate, polymers or copolymers of styrene and/or polyesters, preferably polymers or copolymers of acrylate, having graphite dispersed therein. Examples of suitable conductive lacquers having graphite dispersed therein are those available under the trade name Grapharol^{®}, such as Grapharol^{®} 3, Grapharol^{®} 3K3 or Grapharol^{®} 114 available from Doduco GmbH. The graphite content of the resin component may be between 20% and 60%, preferably 30% to 50%, such as about 35%, about 40% or about 42.5% of the dry weight of the resin component.

According to an embodiment of the present invention, the resin component is admixed with a corrosion inhibitor prior to coating. The corrosion inhibitor may comprise a compound selected from the group of 2-butan-1,4-diol, polyether phosphate, alkanolamine salts of nitrogen-containing organic acids, propargyl alcohol alkoxylate, alkylphosphate, polyether phosphate or oleoyl sarcosine acid or mixtures thereof, and is preferably selected from polyether phosphate and alkylphosphate. Suitable corrosion inhibitors are those available from BASF Se under the trade name Korantin^{®}, such as Korantin^{®} LUB (a corrosion inhibitor which contains polyether phosphate), Korantin^{®} SMK (a corrosion inhibitor which contains alkyl phosphate), Korantin^{®} TC-SH (a corrosion inhibitor which contains oleoyl sacosine acid), Korantin^{®} MAT, and Korantin^{®} PAT (corrosion inhibitors which contain an alkanolamine salt of a nitrogen-containing organic acid), or mixtures thereof. The most preferred are corrosion inhibitors which contain polyether phosphate and/or alkyl phosphate.

The conductive lacquer may contain further additives such as adhesion promoters, e.g. based on organofunctional or aminofunctional silanes, such as those available under the trade name Dynasylan^{®} SIVO 110, 111, 112, 113, 121, 140, 160, 202, 203, or Dynasylan^{®} HYDROSIL 1151, 1153, 2627, 2775, 2776, 2909, 2926, preferably Dynasylan^{®} SIVO 160 or Dynasylan^{®} HYDROSIL 2627 from Evonik Industries AG, and a cross-linker such as melamine. The additives can be added in amount of up to 5% by weight of the total conductive lacquer, preferably in amounts ranging from 1 to 5 wt%.

The conductive lacquer is coated onto a sheet metal blank, preferably using a doctor blade. The coating thickness is preferably chosen between 5 µm and 20 µm, more preferably between 9 µm and 15 µm, such as about 12 µm. After drying of the coated conductive lacquer, preferably at a temperature between room temperature and 150°C, the coated metal blank is radially drawn into a forming die by the mechanical action of a punch to form a coated cup.

The coated cup is thereafter further drawn by a series of repetitive deep drawing steps using a press, wherein a sheet metal blank is radially drawn into a forming die by the mechanical action of a punch to form a battery shell which is coated with a conductive lacquer which comprises a resin component having graphite dispersed therein. Surprisingly, the conductive lacquer which comprises a resin component having graphite dispersed therein is sufficiently flexible to withstand the drawing process and adhere to the surface of the battery shell and acts as a lubricant due to the presence of graphite. Furthermore, the coating is sufficiently conductive to act as an inner coating for a battery shell. Accordingly, the steps of adding a conventional lubricant before or during deep drawing and removing the lubricant after deep drawing by carefully removing oil or grease in the deep drawn battery shell and spraying a conductive material into the inside of the battery shell can ideally be dispensed with.

Preferably, during deep-drawing the maximum temperature should not exceed 120°C, more preferably it should not exceed 100°C. Furthermore, the drawing velocity is preferentially chosen between 1 and 4 m/s, more preferentially between 2 and 3 m/s. It has been found that the conductive layer is sufficiently durable for up to 12 drawing steps and can sustain a total degree of deformation of up to 3.5. Additionally, the process prevents the creation of abrasion, which would obstruct the forming process. The workpiece (battery can) can be carried to a battery production without supplementary production steps.

The battery can be formed in the usually manner by inserting cathode material, e.g. a mixture of manganese dioxide, graphite and into the battery shell coated with the conductive material. In alkaline Zn-MnO₄ batteries, the cathode consists of manganese dioxide as active material and graphite as conducting additive, both in powder form, which are usually pressed into rings and inserted into the coated battery shell. Alternatively the manganese dioxide as active material and graphite as conducting additive may be inserted as a powder into the coated battery shell before the powder is radially and axially pressed into a ring. Then a separator is inserted to prevent short-circuit of a positive and a negative electrode, followed by injecting an electrolyte into the separator to impregnate the separator with the electrolyte, and injecting an anode gel into the impregnated separator. Finally a current collector is inserted into the anode gel and the battery is sealed to prevent leakage and drying. The current collector functions as an anode terminal, and the battery shell can function as cathode.

The appended figures show photographs of coated deep drawn cups.

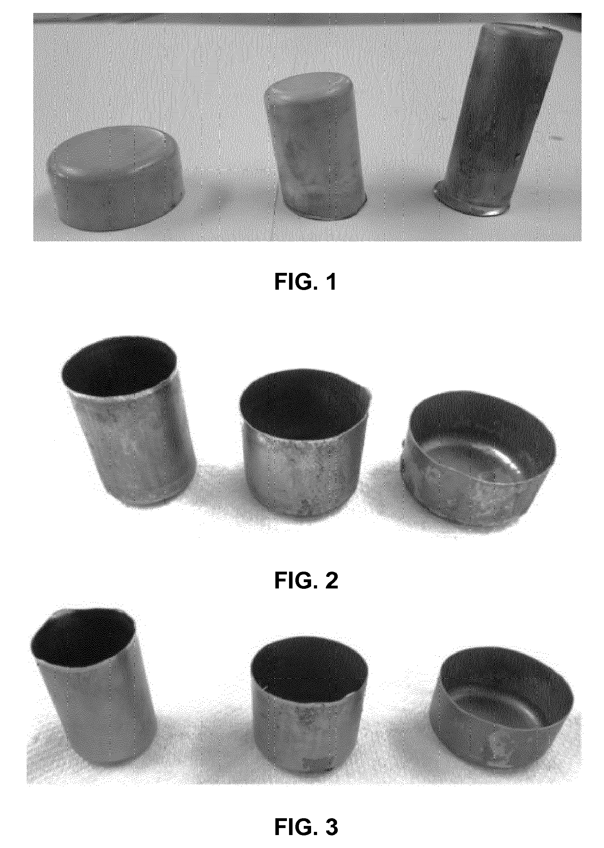

FIG. 1 is illustrative of the invention and shows coated cups after a first, a second and a third drawing step, respectively. A coil coating primer not comprising graphite was applied onto both sides of a steel metal blank with a coating thickness of 12 µm using a coil coating method, whereafter the coating was stoved at a temperature of about 240°C.
Fig. 2 is according to the invention and shows coated cups after a first, a second and a third drawing step, respectively. The coating was applied on both sides a steel metal blank of "Type B" by applying 20 µm of a composition comprising 100 ppw of Grapherol 3K3 and 10 ppw of Korantin^{®} LUB onto the metal blank using a doctor blade, where the coating was cured at a room temperature.
Fig. 3 is according to the invention and shows coated cups after a first, a second and a third drawing step, respectively. The coating was applied on both sides a steel metal blank of "Type C" by applying 20 µm of a composition comprising 100 ppw of Grapherol 3K3 and 10 ppw of Korantin^{®} LUB onto the metal blank using a doctor blade, where the coating was cured at a room temperature.

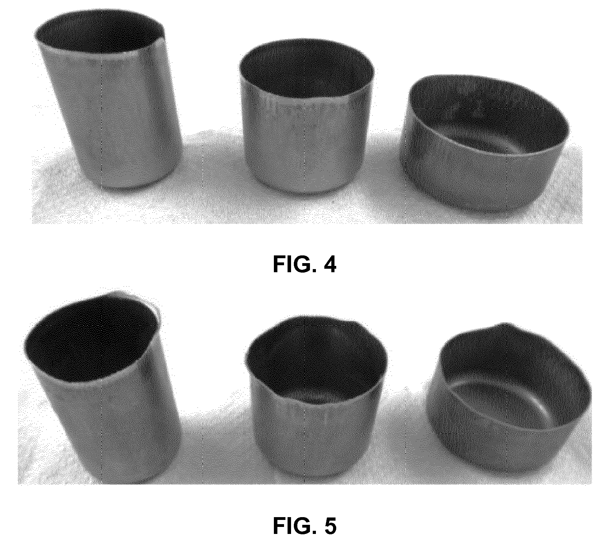

Fig. 4 is according to the invention and shows coated cups after a first, a second and a third drawing step, respectively. The coating was applied on both sides a steel metal blank of "Type B" by applying 20 µm of a composition comprising 100 ppw of Grapherol 3K3 and 10 ppw of Korantin^{®} LUB onto the metal blank using a doctor blade, where the coating was cured 5 minutes at 140°C.
Fig. 5 is according to the invention and shows coated cups after a first, a second and a third drawing step, respectively. The coating was applied on both sides a steel metal blank of "Type C" by applying 20 µm of a composition comprising 100 ppw of Grapherol 3K3 and 10 ppw of Korantin^{®} LUB onto the metal blank using a doctor blade, where the coating was cured 5 minutes at 140°C.

Figure 1 shows good adhesion of the coating after the entire drawing process. However, the coating according to Figure 1 is not conductive. Figures 2 to 5 show that also graphite coatings can withstand the drawing process and adhere to the metal thereafter. While the coating according to Fig. 2 still shows poor adhesion already after the first drawing, the adhesion of the coating according to Fig. 3 was already slightly improved. Further improvements were achieved when the coating was cured at 140°C according to Figs. 4 and 5. It can also be derived that the quality of the coating after the drawing process is dependent from the metal. Metal sheets of "Type C" have improved coating properties over metal sheets of "Type B". Both metal sheets contain cobalt and were produced according the same specifications, however with different coarseness.

It has shown that the use of a resin component having graphite dispersed therein according to the present invention also possesses heat-removing properties which makes it possible to perform the deep-drawing process without any additional lubricants. Accordingly a separate cleaning step after drawing and before coating may be dispensed with, which will lead to savings in overall energy of at least 30% for the drawing process. According to another embodiment a volatile lubricant may be used in the deep drawing process, also making it possible to dispensed with the additional cleaning step after deep drawing, which will also lead to savings in overall energy of at least 30% for the drawing process. The volatile lubricant may be used together with or independently from the resin component having graphite dispersed therein according to the present invention. The volatile lubricant is preferably selected form the group consisting of stearates such as zinc stearate or lithium stearate, stearamides such as stearamide, ethyleneester stereamide, ethylene bisstearamide such as Acrawax C^{®} and volatile, synthetic wax lubricants.

## Claims

1. A battery shell which is coated with a conductive lacquer wherein the conductive lacquer comprises a resin component having graphite dispersed therein.

2. The battery shell of claim 1, wherein the resin component of the conductive lacquer is selected from the group consisting of polymers or copolymers of acrylate, polymers or copolymers of methacrylate, polymers or copolymers of styrene and/or polyesters.

3. The battery shell of any of claims 1 or 2, wherein the graphite content is between 20 and 60% of the dry weight of resin component.

4. The battery shell of any of the previous claims, wherein the conductive lacquer further comprises a corrosion inhibitor component.

5. The battery shell of claim 5, wherein the corrosion inhibitor component comprises a compound selected from the group of 2-butan-1,4-diol, polyether phosphate, alkanolamine salts of nitrogen-containing organic acids, propargyl alcohol alkoxylate, alkylphosphate, polyether phosphate or oleoyl sarcosine acid or mixtures thereof.

6. The battery shell of any of claims 4 or 5, wherein the corrosion inhibitor component is present in a weight ratio of from 1:25 to 1:2 of the resin component.

7. The battery shell of claim 6, wherein the corrosion inhibitor component is present in a weight ratio of from 1:15 to 1:5 of the resin component.

8. A method for producing a coated battery shell according to any of claims 1 to 7, wherein a sheet metal blank is first coated with a conductive lacquer which comprises a resin component having graphite dispersed therein, and which is thereafter radially drawn into a forming die by the mechanical action of a punch to form a coated cup, and wherein the coated cup is further drawn by a series of repetitive deep drawing steps using a press, wherein a sheet metal blank is radially drawn into a forming die by the mechanical action of a punch to form a battery shell which is coated with a conductive lacquer which comprises a resin component having graphite dispersed therein.

9. The method of claim 8, wherein the resin component of the conductive lacquer comprises a polyacrylate, a polymath-acrylate and/or a polyester.

10. The method of any of claims 8 or 9, wherein the graphite content is between 20 and 60% of the dry weight of resin component.

11. The method of any of claims 8 to 10, wherein the conductive lacquer further comprises a corrosion inhibitor component.

12. The method of claims 11, wherein the corrosion inhibitor component comprises a compound selected from the group of 2-butan-1,4-diol, polyether phosphate, alkanolamine salts of nitrogen-containing organic acids, propargyl alcohol alkoxylate, alkylphosphate, polyether phosphate or oleoyl sarcosine acid or mixtures thereof.

13. The method of any of claims 11 or 12, wherein corrosion inhibitor component is present in a weight ratio of from 1:25 to 1:2 of the resin component.

14. The method of any of claims 8 to 13, wherein no lubricant comprising oil or grease is added before or during the drawing processes.

15. The method of any of claims 8 to 13, wherein a volatile lubricant selected form the group consisting of stearates, stearamides and volatile, synthetic wax lubricants is added before or during the drawing processes.

16. A method for producing a coated battery shell according to any of claims 1 to 7, wherein a sheet metal blank is radially drawn into a forming die by the mechanical action of a punch to form a coated cup in the presence of a volatile, heat removing lubricant, and wherein the is further drawn a volatile, heat removing lubricant by a series of repetitive deep drawing steps using a press, wherein a sheet metal blank is radially drawn into a forming die by the mechanical action of a punch to form a battery shell, and wherein the battery shell is thereafter coated with a conductive lacquer which comprises a resin component having graphite dispersed therein.

17. The method of claim 16 wherein the volatile, heat removing lubricant is selected from the group consisting of stearates, stearamides and volatile, synthetic wax lubricants.

18. A method for manufacturing a battery comprising the steps of providing a battery shell which is coated with a conductive lacquer wherein the conductive lacquer comprises a resin component having graphite dispersed therein according to any of claims 1 to 7, inserting cathode material into the battery shell coated with the conductive material to produce a battery shell provided with cathode material, thereafter inserting separator into the battery shell provided with cathode material, followed by injecting an electrolyte into the separator to impregnate the separator with the electrolyte to produce a battery shell provided with cathode material and a separator, injecting an anode gel into battery shell provided with cathode material and a separator, inserting a current collector is inserted into the anode gel, and sealing the so obtained battery.
